Europäisches Patentamt

European Patent Office

Office européen des brevets

(19)

(11) Veröffentlichungsnummer: **0 313 893 B1**

## (12) EUROPÄISCHE PATENTSCHRIFT

(45) Veröffentlichungstag der Patentschrift: **30.12.92**

(51) Int. Cl.⁵: **E06B 3/82**, B29C 67/22

(21) Anmeldenummer: **88116571.6**

(22) Anmeldetag: **06.10.88**

(54) **Torblattelement.**

(30) Priorität: **26.10.87 DE 3736210**

(43) Veröffentlichungstag der Anmeldung:
**03.05.89 Patentblatt 89/18**

(45) Bekanntmachung des Hinweises auf die
Patenterteilung:
**30.12.92 Patentblatt 92/53**

(84) Benannte Vertragsstaaten:
**AT BE CH DE ES FR GB GR IT LI NL SE**

(56) Entgegenhaltungen:
**WO-A-87/00791**
**DE-A- 2 927 653**
**DE-U- 8 603 559**
**FR-A- 1 426 604**

(73) Patentinhaber: **Hörmann KG Brockhagen**
**Horststrasse 17**
**W-4803 Steinhagen/Brockhagen(DE)**

(72) Erfinder: **Hörmann, Michael, Dipl.-Ing.**
**Upheider Weg 94**
**W-4803 Steinhagen(DE)**

(74) Vertreter: **Flügel, Otto, Dipl.-Ing.**
**Wissmannstrasse 14, Postfach 81 05 06**
**W-8000 München 81(DE)**

## Beschreibung

Die Erfindung betrifft ein Torblattelement eines Torblattes aus einer Vielzahl solcher aufeinanderfolgend miteinander zur Bildung eines starren Torblattes - beispielsweise eines Schiebetores - fest verbundener oder zur Bildung eines in sich beweglichen Torblattes - beispielsweise eines Deckengliedertores, Rolltores oder Rollschiebetores - gelenkig verbundener Torblattelemente, bestehend aus zwei Außenschichten, die einen Hohlraum zwischen sich einschließen, einem den Hohlraum ausfüllenden Kern aus Kunststoff und einer zwischen den Außenschichten aufgenommenen und parallel zu diesen verlaufend angeordneten, gewebe- oder mattenartigen Verstärkungseinlage aus Kunststoffasern, die von dem Kunststoff des Kerns partiell durchdrungen ist, der an den dem Kern zugewandten Innenflächen der Außenschichten klebend angreift.

Torblattelemente der hier in Rede stehenden Art können einteilige Torblätter oder auch aus mehreren Segmenten zusammengesetzte Torblätter sein, in letzterem Falle insbesondere solche, die in gelenkiger Verbindung aufeinanderfolgend ein Schieberolltorblatt oder ein Deckengliedertorblatt bilden. Solche Torblattelemente bzw. Torblattsegmente werden in einfachster Ausführung aus einem einschichtigen Blech oder aus zwei Außenwandungen aus Stahlblech gebildet, deren dazwischen aufgenommener Hohlraum mit einer Kunststoffmasse ausgeschäumt ist. Damit kann man akkustische Dämpfungseffekte, erhöhte Wärmedämmung oder dergleichen erreichen. Die Festigkeit solcher ausgeschäumten Kunststofflamellen bzw. Torblattelemente ist bislang durch die Dicke der verwendeten Stahlbleche für die Außenhaupt bedingt, wodurch allerdings das Gewicht des Torblattes entsprechend hoch ist. Dies führt zu Beschränkungen der Größe insbesondere vertikal bewegter Torblätter.

Es ist bereits bekannt - DE-U-86 03 559 - Mehrschichtplatten, wie sie für Torblattelemente Verwendung finden können, aus zwei Außenschichten und einem zwischen diesen eingebrachten Kunststoffkern mit einem gitterförmigen Gebilde zu verstärken, wobei die Außenschichten auch mehrschichtig, beispielsweise aus einer Polyesterschicht und einer innenliegenden Glasfieberschicht, bestehen können. Diese Plattenausbildung soll der Sicherung gegen Einbruch dienen.

Es ist Aufgabe der Erfindung, leichtere Torblätter bzw. solche für höhere Tore zur Verfügung zu stellen, ohne daß sich deren Gewicht derart erhöht, daß man die jetzt bereits für kleinere Tore verwendeten Beschläge nicht mehr anwenden kann.

Ausgehend von einem Torblattelement mit den eingangs genannten Merkmalen wird diese Aufgabe dadurch gelöst, daß die Verstärkungseinlage durch zwei Kunststoffaserschichten gebildet ist, die eine Zugbelastungs-Vorzugsrichtung aufweisen und mit dieser in Bewegungsrichtung des Torblattes verlaufend angeordnet sind und von denen jeweils eine an der Innenfläche einer der beiden Außenschichten anliegt.

Erfindungsgemäß wird also vorgeschlagen, die Außenschichten, die insbesondere aus Blech bestehen, innenseitig mit einer Kaschierung aus einer Kunststoffaser zu versehen, insbesondere einer Kunststoff-Gewebebahn, beispielsweise aus Aramidfasern. Die Festigkeit eines solchen Kunststoffasergewebes ist um ein vielfaches höher als diejenige des verwendeten Stahlbleches. Aus diesem Grunde kann man die Dicke der Deckblatt-Metallschichten, insbesondere also die Deckblechdicke, ganz erheblich verringern, was zu einer entsprechenden Gewichtseinsparung führt, weil die Kunststoffaserkaschierung wesentlich leichter als das Blech ist.

Dabei wird eine solche Kunststofffaser-Gewebebahn verwendet, die in einer Vorzugsrichtung besonders zugfest ist. Die Kunststoffaserschicht wird dann derart angeordnet, daß die Richtung hoher Zugfestigkeit mit derjenigen übereinstimmt, in der die Segmente aufeinanderfolgend angeordnet sind. Dies wird bei den segmenten hier in Rede stehender Art die Richtung sein, in der die Bewegung des Torblattes stattfindet. Auf diese Weise gelingt es, bei gleicher Abdeckungsdicke, nunmehr ein Verbundstoff aus Stahlblech und anliegendem Kunstfasergewebe, bei leichterem Gewicht eine weitaus höhere Festigkeit insbesondere in Zugrichtung zur Verfügung zu stellen. Das führt dazu, daß man entsprechend großflächige Torblätter mit denselben Befestigungsmitteln halten kann.

Weiterhin ist die Kunstfaserschicht als Gewebe oder Matte ausgebildet, dergestalt, daß sie - gegebenenfalls in Anpassung an die den Kern des Torblattelementes bzw. Segmentes zwischen den Außenschichten bildende Kunststoffmasse, insbesondere Kunststoffschaummasse - von der den Kern bildenden Kunststoffmasse partiell durchdrungen werden kann. Diese Kunststoffmasse, insbesondere Polyurethanschaum, hat bestimmte Klebeeigenschaften, so daß die durchtretenden Bestandteile eine feste Verbindung nicht nur jeweils zwischen den Deckblechen und den anliegenden Kunstfasergewebematten, sondern auch zu dem Kern schaffen. Man erhält demnach in fertigungstechnisch besonders einfacher Weise im Zuge der Kernausschäumung eine Verbindung der gesamten, an der Bildung des Torblattelementes bzw. Torblattsegmentes beteiligten Einzelteile.

Herstellungstechnisch kann man derart vorgehen, daß man die beiden Außenschichten vor dem Zusammenführen und der Bildung des Hohlraumes für den Kern an den einander zugewandten Seiten mit einer Kunststoffaserbahn beschichtet bzw. lediglich belegt und anschließend nach dem Zusammenführen mit einer Kunststoffmasse ausfüllt bzw. insbesondere ausschäumt. Dabei kann - wie bereits ausgeführt - die Kunststoffmasse dergestalt sein und die Kunstfasermatte so porös sein, daß mit Hilfe des Kunststoffes eine Verklebung auch der Außenbleche erfolgt.

Es ist somit möglich, eine etwa 0,5 mm dicke Außenhaut aus einem sehr dünnen Blech, beispielsweise 0,28 mm, und einer entsprechend dünnen - 0,22 mm - Kunstfasergewebeschicht zu bilden. Nimmt man eine hochfeste Kunststoffaser und richtet diese entsprechend der Zugbelastung aus, so kann man eine ca. 20 x höhere Zugfestigkeit als diejenige des Stahlbleches erreichen, wobei jedoch das spezifische Gewicht dieser Faserschicht nur ein Bruchteil desjenigen des Stahlbleches beträgt. Als Kunstfaser kommt Glasfaser, insbesondere Aramidfaser, in Betracht, eine Kohlenwasserstoffverbindung.

Bei gleicher Dicke wie das bisher verwendete 0,5 mm-Stahlblech ist die Zugfestigkeit der neuen Außenhaut ca. 10 x größer, das Gewicht ist erheblich geringer. Aus diesem Grunde kann man wesentlich größere, insbesondere breitere, Tore bauen und mit den bisherigen Beschlägen versehen. Das ist ein besonderer Vorteil.

Die Erfindung wird anhand des in der Zeichnung wiedergegebenen Ausführungsbeispieles nachstehend näher erläutert. Es zeigen

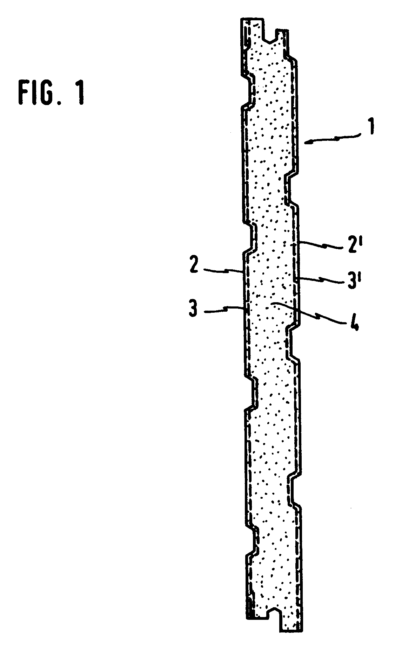

Fig 1 eine Querschnitts-Darstellung eines Torblattsegmentes, das als ausgeschäumte Hohllamelle ausgebildet ist;

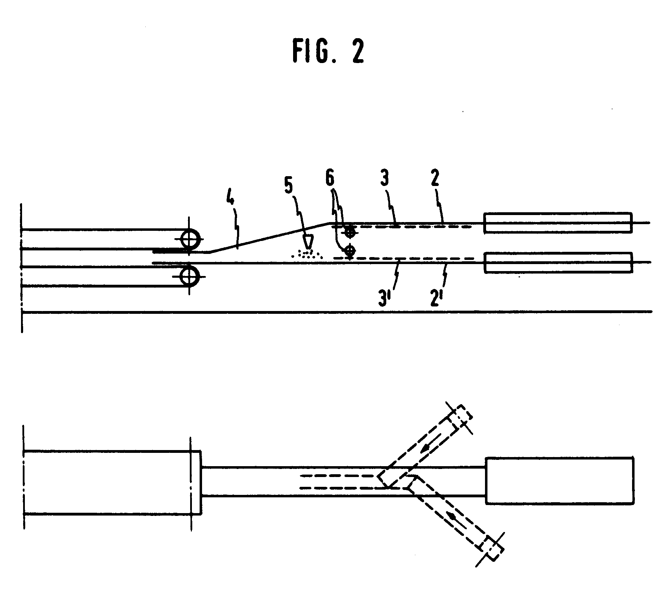

Fig.2 eine schematische Skizze eines Herstellverfahren. Dieses Torblattsegment 1 weist zwei als dünne Bleche ausgebildete Außenschichten 2 und 2' auf, an deren einander zugewandten Innenflächen jeweils eine Kunstfaser-Gewebematte 3 bzw. 3' angeordnet ist. Der zwischen den Außenschichten bzw. den Kunstfaser-Gewebematten verbleibende Hohlraum ist mit einem Kern 4 aus einem Kunststoffschaum ausgefüllt. Dieser Kunststoffschaum kann - wie angedeutet - die poröse bzw. mit entsprechenden Öffnungen versehenen Kunstfaser-Gewebematten 3, 3' durchdringen und gelangt bis an die Innenfläche der Außenbleche 2 und 2'. Aufgrund der Materialeigenschaft des Kunststoffschaumes findet dadurch eine Verklebung statt. Die Poren der Kunstfaser-Gewebematten sind jedoch nicht so groß, daß durch das Ausschäumen des Kerns 4 nicht auch eine Positionierung der Gewebematten an der Innenfläche der Außenschichten stattfindet.

In Fig. 2 ist eine Möglichkeit schematisch aufgezeigt, wie man ein solches Segment maschinell herstellen kann. Das äußere und das innere Deckblech wird jeweils durch eine Profilieranlage geleitet und innerhalb eines Zuführungsbereiches mit den Kunstfaser-Gewebematten versehen, die im vorliegenden Falle als Glasfasermatten ausgebildet sind; dies läßt sich aus Draufsicht ermitteln. Nach Zuführung der Kunstfaser-Gewebematten wird im Bereich einer Düse 5 die aufschäumende Kunststoffmasse zugeführt. Danach wird das Gesamtgebilde mit Hilfe eines Plattenbandes auf die erforderliche Dicke gebracht.

Abweichend von der Darstellung kann man natürlich auch so vorgehen, daß man die Glasfasermatten nicht von der Seite, sondern ebenfalls in Längsrichtung wie die Blechstreifen zuführt.

Bei 6 sind Rollen angedeutet, die die Positionierung der Kunstfaser-Gewebematten 3 und 3' an den jeweiligen Innenflächen der Außendeckbleche 2 bzw. 2' sicherstellen.

Je nach verwendeter Kunstfaserschicht bzw. Kunstfaser-Gewebematte kann man so hohe Festigkeiten erzielen, daß man sogar in der Lage ist, ein schußsicheres bzw. geschoßhemmendes Tür- oder Torblatt auf diese Weise zur Verfügung zu stellen.

**Patentansprüche**

1. Torblattelement eines Torblattes aus einer Vielzahl solcher aufeinanderfolgend miteinander zur Bildung eines starren Torblattes - beispielsweise eines Schiebetores - fest verbundener oder zur Bildung eines in sich beweglichen Torblattes - beispielsweise eines Deckengliedertores, Rolltores oder Rollschiebetores - gelenkig verbundener Torblattelemente, (1), bestehend aus zwei Außenschichten (2, 2'), die einen Hohlraum zwischen sich einschließen, einem den Hohlraum ausfüllenden Kern (4) aus Kunststoff und einer zwischen den Außenschichten (2, 2') aufgenommenen und parallel zu diesen verlaufend angeordneten, gewebe- oder mattenartigen Verstärkungseinlage aus Kunststoffasern, die von dem Kunststoff des Kerns (4) partiell durchdrungen ist, der an den dem Kern (4) zugewandten Innenflächen der Außenschichten (2, 2') klebend angreift, **dadurch gekennzeichnet,** daß die Verstärkungseinlage durch zwei Kunststoffaserschichten (3, 3') gebildet ist, die eine Zugbelastungs-Vorzugsrichtung aufweisen und mit dieser in Bewegungsrichtung des Torblattes verlaufend angeordnet sind und von denen jeweils eine an der Innenfläche einer der beiden Außenschichten (2, 2') anliegt.

2. Torblattelement nach Anspruch 1, **dadurch gekennzeichnet,**

daß die Außenschichten (2, 2') aus Metallblech bestehen.

3. Torblattelement nach Anspruch 1 oder 2, **dadurch gekennzeichnet,** daß die Kunststoffaserschichten (3, 3') als Glasfaserschichten, beispielsweise Aramidfasermatten, ausgebildet sind.

4. Torblattelement nach einem der Ansprüche 1 bis 3, **dadurch gekennzeichnet,** daß der Kern (4) aus Kunststoffschaum, beispielsweise Polyurethanschaum, gebildet ist.

5. Verfahren zur Herstellung eines Torblattelementes nach einem der Ansprüche 1 bis 4, **dadurch gekennzeichnet,** daß die beiden Außenschichten, insbesondere Blechstreifen, einzeln zugeführt werden, daß vor deren Zusammenführen die beiden Kunststoffaserschichten an die aufeinander zu gerichteten Außenschichten zugeführt werden und daß dann eine den Kern bildende Kunststoffmasse, insbesondere eine Kunststoffschaummasse, zwischen die Kunststoffaserschichten eingegeben wird.

6. Verfahren nach Anspruch 5, **dadurch gekennzeichnet,** daß die den Kern bildende Kunststoffmasse die Kunststoffaserschichten im Zuge der Hohlraumfüllung an die Innenfläche der jeweiligen Außenschicht andrückt und dann bzw. dabei die Kunststoffaserschichten partiell durchdringt und daraufhin die Außenschichten durch die Kunststoffaserschichten hindurch mit der Kunststoffmasse des Kerns klebend zu einer Einheit verbindet.

## Claims

1. A door-leaf member of a door-leaf which consists of a plurality of such door-leaf members (1) successively fixedly connected to one another to form a rigid door-leaf, for example a sliding door, or pivotally connected to one another to form a door-leaf movable in itself, for example an up-and-over door, a roller door or a roller sliding door, comprising two outer layers (2, 2'), enclosing between them a cavity, a core (4) made of a synthetic filling up the cavity and a fabric- or matlike reinforcing insert of synthetic fibres which is received between the outer layers (2, 2') and arranged so as to extend parallel thereto, said reinforcing insert being partly penetrated by the synthetic of the core (4) which acts by adhesion on the inner faces of the outer layers (2, 2'), facing the core (4), characterised in that the reinforcing insert is formed by two layers of synthetic fibres (3, 3') which have a preferred direction of tensile load and are arranged so as to extend, with said direction, in the direction of movement of the door-leaf and of which one abuts, in each case, on the inner face of the two outer layers (2, 2').

2. A door-leaf member according to claim 1, characterised in that the outer layers (2, 2') consist of sheet metal.

3. A door-leaf member according to claim 1 or 2, characterised in that the layers of synthetic fibres (3, 3') are in the form of glass fibre layers, for example aramide fibre mats.

4. A door-leaf member according to claims 1 to 3, characterised in that the core (4) is formed from synthetic foam, for example polyurethane foam.

5. A process for preparing a door-leaf member according to any one of claims 1 to 4, characterised in that the two outer layers, in particular strips of sheet metal, are delivered individually, that the two layers of synthetic fibres are delivered to the facing outer layers, before being joined thereto, and that a synthetic compound, particularly a synthetic foam compound, forming the core is then introduced between the layers of synthetic fibres.

6. A process according to claim 5, characterised in that the synthetic compound forming the core presses the layers of synthetic fibres against the inner faces of the relevant outer layer and then, or whilst doing so, partly penetrates the layers of synthetic fibres, whereupon the outer layers are adhesively connected, through the layers of synthetic fibres, to the synthetic compound of the core, thus forming a unit.

## Revendications

1. Elément d'une porte formée d'un grand nombre de tels éléments (1) reliés ensemble de façon fixe les uns à la suite des autres pour former une porte rigide, par exemple une porte coulissante reliée fixement ou pour former une porte mobile - par exemple une porte d'éléments de plafond, une porte roulante ou une porte coulissante à galets - élément se composant de deux placages extérieurs (2, 2'), qui forment entre eux un espace creux, d'une âme (4) en matière synthétique remplissant l'espace creux et d'une garniture de renforcement en fibres de matière synthétique, du type tissu ou natte, placée entre les placages (2, 2') en se développant parallèlement à ceux-ci, qui est pénétrée partiellement par la matière synthétique de l'âme (4), appliquée par collage sur les faces intérieures tournées vers l'âme (4) des placages extérieurs (2, 2'), caractérisé en ce que la garniture de renforcement est formée de deux couches (3, 3') de fibres de matière synthétique, qui ont un sens préférentiel de charge à traction et sont placées en se développant dans ce sens dans la direction du mouvement de la porte et parmi lesquelles respectivement l'une adhère contre la face intérieure d'un des deux panneaux extérieurs (2, 2').

2. Elément de porte selon la revendication 1, caractérisé en ce que les panneaux extérieurs (2, 2') sont composés d'une tôle métallique.

3. Elément de porte selon la revendication 1 ou 2, caractérisé en ce que les couches de fibres de matière synthétique (3, 3') sont réalisées comme couches en fibres de verre, par exemple comme natte de fibres d'aramide.

4. Elément de porte selon l'une des revendication 1 à 3, caractérisé en ce que l'âme (4) est formée de mousse de matière synthétique, par exemple de mousse de polyuréthanne.

5. Procédé de fabrication d'un élément de porte selon l'une des revendications 1 à 4, caractérisé en ce que les deux panneaux extérieurs, en particulier des bandes de tôle, sont amenés séparément, en ce que les deux couches de fibres de matière synthétique sont amenées en direction des panneaux extérieurs avant de les assembler sur ces derniers et en ce qu'ensuite, une masse de matière synthétique formant l'âme en particulier une masse de mousse de matière synthétique est insérée entre les couches de fibres de matière synthétique.

6. Procédé selon la revendication 5, caractérisé en ce que la masse de matière synthétique constituant l'âme, presse les couches de fibres de matière synthétique en fonction du remplissage de l'espace creux contre la face intérieure de chaque panneau extérieur et ensuite ou en outre, pénètre partiellement les couches de fibres de matière synthétique et après cela relie en une unité par encollage les panneaux extérieurs à la masse de matière synthétique de l'âme à travers les couches de fibres en

matière synthétique.

FIG. 1

# FIG. 2